# FASCICULE DE BREVET EUROPEEN

(11) **EP 1 423 634 B1**
(45) Date de publication et mention de la délivrance du brevet: **04.05.2005**
(21) Numéro de dépôt: 02779623.4
(22) Date de dépôt: 08.08.2002
(51) Int. Cl.: F16L 11/08, F16L 11/20

(54) **CONDUITE FLEXIBLE POUR LE TRANSPORT D'UN FLUIDE**
FLEXIBLES ROHR ZUM TRANSPORT EINES FLUIDS
FLEXIBLE PIPE FOR TRANSPORTING A FLUID

(30) Priorité: 27.08.2001 FR 0111135
(43) Date de publication de la demande: 02.06.2004
(73) Titulaire: Technip France, 92400 Courbevoie (FR)
(72) Inventeur: MARION, Alain, F-76130 Mont Saint Aignan (FR)
(74) Mandataire: Bertrand, Didier
(86) Numéro de dépôt international: PCT/FR2002/002832
(87) Numéro de publication internationale: WO 2003/019064

(56) Documents cités:
- FR-A- 2 744 511
- US-A- 5 343 738
- US-A- 5 865 216

## Description

La présente invention concerne une conduite flexible pour le transport d'un fluide tel qu'un fluide polyphasique ou un gaz.

Il a été proposé de chemiser des conduites rigides métalliques avec un chemisage polymérique qui se présente sous la forme d'une gaine polymérique qui est plaquée sur la paroi interne de la conduite rigide. Une telle technique de protection de la conduite rigide est décrite notamment dans WO 00/77587 Al. Il est également décrit dans ce document des structures particulières de la chemise (ou liner en anglais), une des structures permettant l'évacuation des gaz provenant du fluide circulant dans la conduite rigide et diffusant à travers la chemise, afin de limiter la corrosion de la conduite flexible métallique.

Dans les conduites flexibles de production, le fluide transporté est souvent polyphasique et il contient des gaz tels que H₂S, CO₂, méthane, qui peuvent diffuser à travers la gaine de pression. En raison de cette diffusion de gaz, les éléments métalliques de la structure des conduites flexibles, tels que carcasse, voûte de pression et armures de traction, doivent être résistant à l'H₂S. La fabrication de ces éléments métalliques est donc onéreuse car elle implique des traitements particuliers comme une trempe, un revenu, un patentage ou d'autres opérations supplémentaires, alors que les caractéristiques mécaniques restent moyennes.

Dans les conduites flexibles dites "smooth-bore" c'est-à-dire comportant comme élément le plus interne une gaine d'étanchéité interne qui est appelée également gaine de pression, le gaz provenant du fluide transporté et diffusant à travers la gaine d'étanchéité interne, augmente la pression de l'annulaire, ce qui peut entraîner l'effondrement de la gaine de pression. De ce fait, il est prévu un drainage de ce gaz pour limiter la pression de l'annulaire, le drainage s'effectuant à travers et le long des armures de traction vers une soupape qui débouche à l'extérieur de la conduite flexible. Toutefois, dans la plupart des cas, les conduites flexibles de ce type comportent une gaine anti-écrasement, généralement polymérique, située au-dessus de la voûte de pression et le drainage du gaz par les armures de traction devient impossible puisque le gaz est arrêté par la gaine anticollapse ou anti-écrasement située au-dessous desdites armures. En raison de cette difficulté de drainage du gaz, les conduites flexibles dites "smooth-bore" ne sont pas utilisées pour la production et sont réservées aux lignes d'injection d'eau.

Dans les conduites dites "rough-bore" dans lesquelles l'élément le plus interne est constitué par une carcasse métallique, une gaine anti-écrasement peut également être utilisée, disposée au-dessus de la voûte de pression.

Pour résoudre ce problème, il a été proposé dans FR-B-2 775 052, de disposer la gaine anticollapse entre deux paires d'armures, de sorte que le drainage du gaz s'effectue dans la partie inférieure d'armures qui est située immédiatement au-dessous de la gaine anticollapse. Dans ces conditions, il est devenu possible d'utiliser des matériaux différents pour la confection des deux paires d'armures. La paire d'armures située au-dessous de la gaine anti-collapse sera fabriquée avec un acier qui n'est pas résistant à l'H₂S, donc moins cher et présentant de meilleures caractéristiques mécaniques alors que l'acier utilisé pour la fabrication de la paire d'armures qui est en contact avec le gaz doit être résistant à l'H₂S et donc relativement cher avec des caractéristiques mécaniques moyennes et un poids plus élevé.

Dans la demande WO 99/66246, il est décrit un flexible dans lequel une couche est ménagée au-dessus de la voûte de pression pour permettre l'écoulement longitudinal d'un gaz présent dans l'annulaire ou diffusant à travers la gaine de pression.

Il a été prévu également mais sans avoir été exploité industriellement de réaliser une voûte de pression avec des fils de forme dont les sections comportent des évidements latéraux afin de ménager un canal pour le drainage du gaz. Les fils de forme en Z, U, T, I, etc... peuvent comporter de tels évidements latéraux. Ces fils de forme étant déjà relativement chers et lourds, ils devront également être résistants à l'H₂S, sans parler des pertes de charge importantes qui se produiraient tout le long de la voûte de pression.

Dans WO 01/33130 A₁, il est décrit une conduite flexible comprenant plusieurs couches de différents matériaux et dont l'une comporte des passages de drainage, ce drainage pouvant s'effectuer entre la gaine de pression et la voûte de pression ou encore le long des armures.

Toutefois, le gaz drainé est toujours en contact avec des éléments métalliques (voûte de pression ou armures de traction), ce qui impose des matériaux pouvant résister à la présence d'H₂S notamment.

Les solutions proposées dans l'art antérieur décrit ci-dessus ne permettent pas d'éliminer les inconvénients liés à la présence de gaz dans l'annulaire et notamment ne permettent pas de résoudre les problèmes de corrosion.

Dans un autre domaine technique comme l'extrusion de tubes plastiques, il a été proposé, par exemple dans WO 90/02648, de ménager, dans l'épaisseur du tube, des canaux longitudinaux. Ces derniers ont pour but d'alléger les tubes plastiques et non pas de permettre un drainage quelconque de gaz corrosifs.

La présente invention a pour but de proposer une conduite flexible du type "smooth-bore" ou "rough-bore", qui permette d'utiliser dans pratiquement tous les cas un acier ne résistant pas à l'H₂S tout en drainant convenablement et efficacement le gaz provenant du fluide transporté et diffusant à travers la gaine de pression.

Un objet de la présente invention est une conduite flexible, du type comprenant une gaine externe d'étanchéité polymérique, au moins une paire d'armures enroulées hélicoïdalement avec un pas long, une voûte de pression et une gaine de pression polymérique, et caractérisée en ce que la gaine de pression est constituée par un tube intérieur disposé dans un tube extérieur, et en ce que des rainures sont ménagées sur au moins une des surfaces en regard desdits tubes intérieur et extérieur.

Un avantage de la présente invention réside dans le fait que la gaine de pression étant réalisée à l'aide de deux tubes plastiques, les caractéristiques de la conduite flexible ne sont pas altérées tout en permettant un drainage efficace au niveau des rainures du tube plastique qui les comporte.

Selon une autre caractéristique, des organes de renfort sont disposés dans au moins certaines desdites rainures, ce qui permet d'éviter un fluage sous l'effet de la pression interne et de la température du fluide transporté.

Selon une autre caractéristique, la gaine de pression constitue la gaine d'étanchéité disposée autour de la carcasse métallique lorsque la conduite flexible comprend une telle carcasse métallique.

D'autres caractéristiques et avantages ressortiront mieux à la lecture de plusieurs modes de réalisation de l'invention, ainsi que des dessins annexés sur lesquels :
La figure 1 est une vue en perspective partielle d'une conduite flexible du type "rough-bore" avec une carcasse métallique constituant l'élément le plus interne et comprenant une gaine de pression selon l'invention.
La figure 2 est une vue en perspective partielle d'une conduite flexible du type "smooth-bore" avec une gaine de pression selon l'invention constituant l'élément le plus interne.
La figure 3 est une vue en perspective partielle d'un tube de la gaine de pression comprenant des rainures hélicoïdales.
La figure 4 est une vue en perspective partielle d'un tube de la gaine de pression comprenant des rainures droites suivant des génératrices du tube circulaire et des rainures transversales.
La figure 5 est une vue en coupe d'une gaine de pression selon l'invention, les rainures étant ménagées sur la paroi interne du tube externe.
La figure 6 est une vue en coupe d'une gaine de pression selon l'invention, les rainures étant ménagées sur la paroi externe du tube interne.
La figure 7 est une vue en coupe d'une gaine de pression selon l'invention, les rainures étant ménagées en regard les unes des autres et sur les parois en regard des tubes interne et externe.
La figure 8 est une vue analogue à la figure 6 mais avec des rainures comportant des organes de renfort.

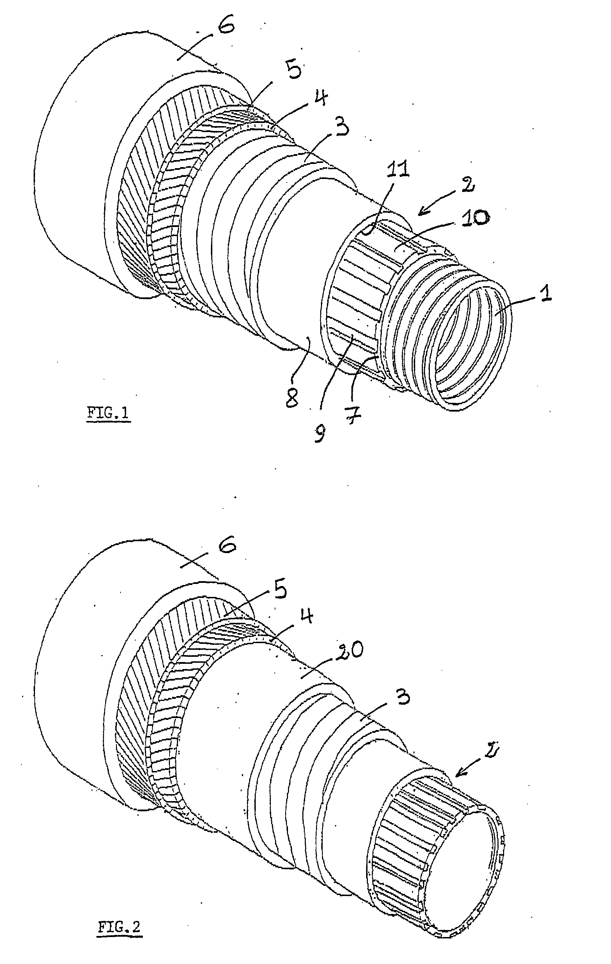

La conduite flexible représentée sur la figure 1 est du type "rough-bore" et comprend de l'intérieur vers l'extérieur une carcasse métallique 1 réalisée par enroulement à pas court d'un fil de forme en acier résistant à l'H₂S car le fluide à transporter s'écoule dans ladite carcasse métallique, une gaine de pression polymérique ou gaine d'étanchéité interne 2, une voûte de pression 3 enroulée hélicoïdalement autour de l'axe longitudinal de la conduite avec un pas court, une paire de nappes d'armures de traction 4, 5, la nappe d'armures 4 étant réalisée par enroulement hélicoïdal à pas long et la nappe d'armures 5 étant enroulée hélicoïdalement avec un pas long mais en sens inverse de celui de la nappe d'armures 5 puis enfin une gaine d'étanchéité polymérique externe 6.

La gaine de pression polymérique 2 est constituée par deux tubes concentriques en matière plastique 7 et 8, disposés l'un dans l'autre. Le tube intérieur 7 comprend sur sa face externe 10 des rainures 9 alors que la paroi interne en regard 11 du tube extérieur 8 est lisse.

Le gaz circulant dans la carcasse métallique 1 de la conduite flexible et diffusant à travers le tube interne 7 est drainé par les rainures 9 jusqu'à un organe d'échappement à l'extérieur non représenté. De cette manière, une diffusion ou circulation radiale des gaz vers des couches supérieures métalliques comme la voûte de pression 3 et les armures de traction 4 et 5 est considérablement réduite et même parfois totalement interrompue. De ce fait, la nature du métal dans lequel sont réalisées lesdites couches supérieures n'a pas besoin d'être compatible à l'H₂S, ce qui permettra de choisir un acier présentant de bonnes caractéristiques mécaniques et être moins coûteux que les métaux compatibles à l'H₂S qui nécessitent à cet effet des procédés spécifiques de fabrication tels qu'une trempe-revenu ou encore un patentage très particulier. Dans la conduite flexible de la figure 1, comme celles des autres figures, les tubes constituant la gaine de pression sont en contact intime par leurs faces en regard 10 et 11.

La conduite flexible représentée sur la figure 2 est du type "smooth-bore"qui se différencie de celle de la figure 1 par l'absence de carcasse métallique, la gaine interne ou gaine de pression polymérique constituant l'élément le plus interne de ladite conduite flexible, le fluide à transporter s'écoulant dans ladite gaine de pression. La gaine de pression 2 est identique à celle représentée sur la figure 1 avec les mêmes caractéristiques décrites précédemment. Il est important de noter que grâce à la présente invention, il devient possible d'utiliser des conduites flexibles "smooth-bore" pour la production et comportant une gaine anti-collapse 20 disposée entre la voûte de pression 3 et les armures de traction 4, 5, la gaine anti-collapse 20 ayant pour fonction de reprendre la pression hydrostatique par la voûte de pression. De même, une conduite "smooth-bore" selon la présente invention peut être utilisée pour le transport de produits gazeux ou polyphasiques notamment pour des applications de production et de ligne d'injection d'eau où l'eau n'est pas complètement dégazée.

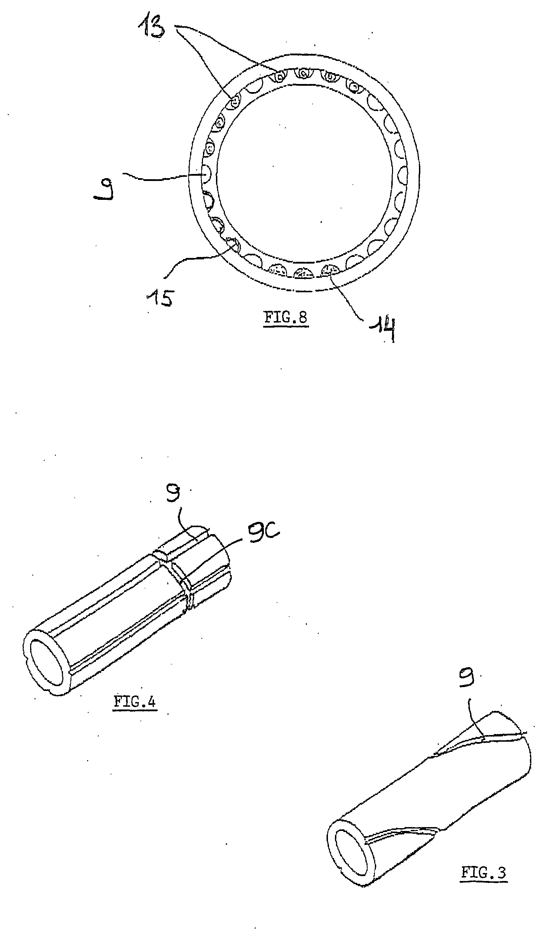

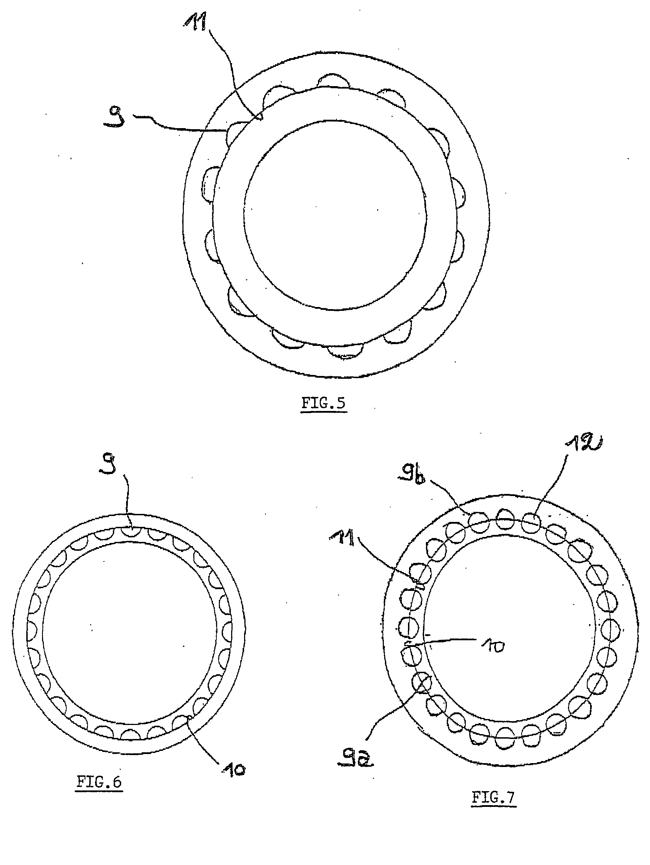

Les rainures 9 ménagées dans la gaine de pression peuvent être hélicoïdales ainsi que cela est représenté sur la figure 3 ou droites, sur au moins une partie de la longueur du tube qui les comprend (figure 4). De manière à éviter un blocage quelconque du drainage, des rainures transversales 9c peuvent être ménagées régulièrement sur la longueur du tube correspondant.

Les rainures 9 peuvent être ménagées sur la face 11 du tube extérieur (figure 5) au lieu d'être sur la face 10 du tube intérieur 7 comme cela est représenté sur les figures 1, 2 et 6.

Il est également possible de réaliser des canaux fermés 12 en ménageant des rainures 9a et 9b respectivement sur la face interne 11 du tube extérieur 8 et sur la face externe 10 du tube intérieur 7, ainsi que cela est représenté sur la figure 7. Bien évidemment, pour réaliser de tels canaux fermés 12, il est nécessaire que les rainures 9a et 9b soient en regard les unes des autres.

Il est important de noter que les tubes intérieur 7 et extérieur 8, doivent être distincts l'un de l'autre, c'est-à-dire ne pas être soudés l'un à l'autre. En effet, il faut que, sous l'action de la pression du gaz diffusant au travers du tube intérieur 7, ce dernier se décolle en se séparant du tube extérieur 8 de manière à permettre au gaz diffusant entre deux rainures d'être drainé vers lesdites rainures et d'éviter ainsi la diffusion de gaz à travers le tube extérieur 8.

Selon une autre caractéristique de l'invention, les rainures 9, 9a ou 9b peuvent être renforcées si besoin était. Les organes de renfort 13 susceptibles d'être utilisés peuvent être constitués par un jonc poreux, un tube poreux, un ressort métallique ou un toron d'acier, disposés dans au moins certaines desdites rainures. Il est également possible de remplir certaines des rainures par une matière poreuse 14 ou encore d'insérer une chemise 15 et de l'appliquer contre la surface des rainures concernées. Sur la figure 8, on a représenté les divers organes dé renfort mentionnés ci-dessus, étant précisé que ces organes de renfort peuvent être utilisés quel que soit le type de gaine de pression représenté sur l'une des figures 5 à 7.

Il est également possible de différencier les tubes constituant la gaine de pression telle que décrite ci-dessus en réalisant le tube interne de telle sorte qu'il constitue un écran thermique pour le tube externe. Pour cela, le tube interne sera réalisé dans un matériau présentant une meilleure résistance à la température et le tube externe sera réalisé dans un matériau présentant une meilleure résistance mécanique. C'est ainsi que le tube interne pourra être réalisé en PFA et le tube externe en PVDF pour des températures du fluide supérieures à 130°C.

La perméabilité des tubes intérieur 7 et extérieur 8 peut être identique ou différente étant précisé, dans ce dernier cas, que la perméabilité du tube extérieur 8 doit être inférieure à la perméabilité du tube intérieur 7.

Enfin, le drainage pourra s'effectuer à la pression atmosphérique. Pour ce faire, le gaz sera drainé directement vers la surface ou vers des caissons intermédiaires à pression atmosphérique.

## Revendications

1. Conduite flexible pour le transport d'un fluide, du type comprenant une gaine externe d'étanchéité polymérique (6), au moins une paire de nappes d'armures (4, 5) enroulées hélicoïdalement avec un pas long, et une gaine de pression polymérique (2), **caractérisée en ce que** la gaine de pression est constituée par un tube intérieur (7) disposé dans un tube extérieur (8), et **en ce que** des rainures (9) sont ménagées sur au moins une des surfaces en regard (10, 11) desdits tubes intérieur et extérieur (7, 8).

2. Conduite flexible selon la revendication 1, **caractérisée en ce que** les rainures (9) sont ménagées sur la surface intérieure (11) du tube extérieur (8).

3. Conduite flexible selon la revendication 1, **caractérisée en ce que** les rainures (9) sont ménagées sur la surface externe (10) du tube intérieur (7).

4. Conduite flexible selon la revendication 1, **caractérisée en ce que** les rainures (9a, 9b) sont ménagées sur chacune des surfaces (10, 11) en regard.

5. Conduite flexible selon la revendication 4, **caractérisée en ce que** les rainures (9a, 9b) des surfaces en regard sont en correspondance l'une avec l'autre de manière à constituer des passages fermés (12).

6. Conduite flexible selon l'une des revendications 1 à 5, **caractérisée en ce que** les rainures (9) sont au moins en partie rectilignes sur une partie de la longueur des tubes.

7. Conduite flexible selon l'une des revendications 1 à 5, **caractérisée en ce que** les rainures (9) sont au moins en partie hélicoïdales à pas long.

8. Conduite flexible selon l'une des revendications 1 à 5, **caractérisée en ce que** les surfaces (10,11) des tubes intérieur (7) et extérieur (8) sont en contact l'une sur l'autre.

9. Conduite flexible selon la revendication 1, **caractérisée en ce que** le tube intérieur (7) constitue un écran thermique pour le tube extérieur.

10. Conduite flexible selon l'une des revendications 1 à 7, **caractérisée en ce que** des organes de renfort (13) sont disposés dans au moins certaines des rainures.

11. Conduite flexible selon la revendication 1, **caractérisée en ce que** la gaine de pression (2) constitue la gaine d'étanchéité dans laquelle circule le fluide à transporter.

12. Conduite flexible selon la revendication 1, **caractérisée en ce que** la gaine de pression (2) constitue la gaine d'étanchéité disposée autour d'une carcasse métallique (11) dans laquelle circule le fluide à transporter.

13. Conduite flexible selon les revendications 11 ou 12, **caractérisée en ce que** la conduite flexible comporte une gaine anti-collapse (20) disposée au-dessus de la voûte de pression (3).

14. Conduite flexible selon la revendication 1, **caractérisée en ce que** les tubes intérieur (7) et extérieur (8) présentent une perméabilité identique ou différente.

## Patentansprüche

1. Flexible Leitung für den Transport eines Fluids, des Typs, der eine äußere Polymer-Abdichtungshülle (6), wenigstens ein Paar Bewehrungslagen (4, 5), die mit einer großen Steigung schraubenlinienförmig gewickelt sind, und eine Polymer-Druckhülle (2) umfasst, **dadurch gekennzeichnet, dass** die Druckhülle durch ein Innenrohr (7), das in einem Außenrohr (8) angeordnet ist, gebildet ist und dass zumindest in einer der gegenüberliegenden Oberflächen (10, 11) des Innenrohrs (7) und des Außenrohrs (8) Rillen (9) ausgespart sind.

2. Flexible Leitung nach Anspruch 1, **dadurch gekennzeichnet, dass** die Rillen (9) in der inneren Oberfläche (11) des Außenrohrs (8) ausgespart sind.

3. Flexible Leitung nach Anspruch 1, **dadurch gekennzeichnet, dass** die Rillen (9) in der äußeren Oberfläche (10) des Innenrohrs (7) ausgespart sind.

4. Flexible Leitung nach Anspruch 1, **dadurch gekennzeichnet, dass** die Rillen (9a, 9b) in jeder der gegenüberliegenden Oberflächen (10, 11) ausgespart sind.

5. Flexible Leitung nach Anspruch 4, **dadurch gekennzeichnet, dass** sich die Rillen (9a, 9b) der gegenüberliegenden Oberflächen einander in der Weise entsprechen, dass sie geschlossene Durchlässe (12) bilden.

6. Flexible Leitung nach einem der Ansprüche 1 bis 5, **dadurch gekennzeichnet, dass** die Rillen (9) auf einem Teil der Länge der Rohre wenigstens teilweise geradlinig sind.

7. Flexible Leitung nach einem der Ansprüche 1 bis 5, **dadurch gekennzeichnet, dass** die Rillen (9) wenigstens zum Teil schraubenlinienförmig mit großer Steigung sind.

8. Flexible Leitung nach einem der Ansprüche 1 bis 5, **dadurch gekennzeichnet, dass** die Oberflächen (10, 11) des Innenrohrs (7) und des Außenrohrs (8) miteinander in Kontakt sind.

9. Flexible Leitung nach Anspruch 1, **dadurch gekennzeichnet, dass** das Innenrohr (7) für das Außenrohr eine Wärmeabschirmung bildet.

10. Flexible Leitung nach einem der Ansprüche 1 bis 7, **dadurch gekennzeichnet, dass** wenigstens in bestimmten Rillen Versteifungsorgane (13) angeordnet sind.

11. Flexible Leitung nach Anspruch 1, **dadurch gekennzeichnet, dass** die Druckhülle (2) die Abdichtungshülle bildet, in der das zu transportierende Fluid fließt.

12. Flexible Leitung nach Anspruch 1, **dadurch gekennzeichnet, dass** die Druckhülle (2) die Abdichtungshülle bildet, die um eine Metallkarkasse (11) angeordnet ist, in der das zu transportierende Fluid fließt.

13. Flexible Leitung nach den Ansprüchen 11 oder 12, **dadurch gekennzeichnet, dass** die flexible Leitung eine ein Zusammendrücken verhindernde Hülle (20) aufweist, die auf dem Druckgewölbe (3) angeordnet ist.

14. Flexible Leitung nach Anspruch 1, **dadurch gekennzeichnet, dass** das Innenrohr (7) und das Außenrohr (8) entweder die gleiche oder eine unterschiedliche Permeabilität aufweisen.

## Claims

1. A flexible pipe for transporting a fluid, of the type comprising a polymeric outer sealing sheath (6), at least one pair of armor layers (4, 5) wound helically with a long pitch, and a polymeric pressure sheath (2), **characterized in that** the pressure sheath consists of an inner tube (7) arranged in an outer tube (8), and **in that** grooves (9) are made on at least one of the surfaces (10, 11) facing each other belonging to said inner and outer tubes (7, 8).

2. The flexible pipe as claimed in claim 1, **characterized in that** the grooves (9) are made on the interior surface (11) of the outer tube (8).

3. The flexible pipe as claimed in claim 1, **characterized in that** the grooves (9) are made on the external surface (10) of the inner tube (7).

4. The flexible pipe as claimed in claim 1, **characterized in that** the grooves (9a, 9b) are formed on each of the surfaces (10, 11) facing each other.

5. The flexible pipe as claimed in claim 4, **characterized in that** the grooves (9a, 9b) on the surfaces facing each other are in register with one another so as to form closed passages (12).

6. The flexible pipe as claimed in one of claims 1 to 5, **characterized in that** the grooves (9) are at least partially straight over part of the length of the tubes.

7. The flexible pipe as claimed in one of claims 1 to 5, **characterized in that** the grooves (9) are at least partially helical with a long pitch.

8. The flexible pipe as claimed in one of claims 1 to 5, **characterized in that** the surfaces (10, 11) of the inner (7) and outer (8) tubes are in contact with one another.

9. The flexible pipe as claimed in claim 1, **characterized in that** the inner tube (7) constitutes a heat screen for the outer tube.

10. The flexible pipe as claimed in one of claims 1 to 7, **characterized in that** reinforcing members (13) are arranged in at least some of the grooves.

11. The flexible pipe as claimed in claim 1, **characterized in that** the pressure sheath (2) constitutes the sealing sheath in which the fluid that is to be transported flows.

12. The flexible pipe as claimed in claim 1, **characterized in that** the pressure sheath (2) constitutes the sealing sheath arranged around a metal carcass (11) in which the fluid that is to be transported flows.

13. The flexible pipe as claimed in claims 11 or 12, **characterized in that** the flexible pipe comprises an anti-collapse sheath (20) arranged above the pressure armor layer(s) (3).

14. The flexible pipe as claimed in claim 1, **characterized in that** the inner (7) and outer (8) tubes have the same permeability or different permeabilities.
